Europäisches Patentamt

European Patent Office

Office européen des brevets

(11) Publication number: **0 086 580**
**B1**

# EUROPEAN PATENT SPECIFICATION

(45) Date of publication of patent specification: **09.04.86**

(51) Int. Cl.⁴: **C 10 G 11/18**

(21) Application number: **83300380.9**

(22) Date of filing: **26.01.83**

(54) Method and apparatus for fluid catalytic cracking.

(30) Priority: **12.02.82 US 348484**

(43) Date of publication of application:
**24.08.83 Bulletin 83/34**

(45) Publication of the grant of the patent:
**09.04.86 Bulletin 86/15**

(84) Designated Contracting States:
**BE DE FR GB IT NL**

(56) References cited:
**US-A-2 838 062**
**US-A-2 838 063**
**US-A-2 838 065**
**US-A-2 901 331**
**US-A-3 812 029**
**US-A-4 093 537**
**US-A-4 118 338**
**US-A-4 246 231**

(73) Proprietor: **MOBIL OIL CORPORATION**
**150 East 42nd Street**
**New York New York 10017 (US)**

(72) Inventor: **Gross, Benjamin**
**1693 Blue Jay Lane**
**Cherry Hill New Jersey 08003 (US)**
Inventor: **Haddad, James Henry**
**45 Van Wyck Drive**
**Princeton New Jersey 08550 (US)**
Inventor: **Malladi, Madhave**
**40 Tattersall Drive**
**West Deptford New Jersey 08501 (US)**

(74) Representative: **West, Alan Harry et al**
**Mobil Court 3 Clements Inn**
**London WC2A 2EB (GB)**

Courier Press, Leamington Spa, England.

# 0 086 580

## Description

This invention relates to a method and apparatus for fluid catalytic cracking and, more particularly, to an improved fluid catalytic regenerator and its method of operation.

In recent years the design and operation of fluid cracking operations with an adjacent catalyst regeneration system have gone through some unusual transitions with a view to improving efficiency and product distribution. In particular, these designs have been concerned with utilizing fluid crystalline aluminosilicate cracking catalysts in catalyst-to-oil feed ratios which minimize the catalyst inventory, improve product selectivity, and improve the recovery of available heat generated in the catalyst regenerator. Catalyst regeneration has been improved by increasing the catalyst regeneration temperature by the recycle of hot regenerated catalyst and particularly by promoting the combustion of CO to $CO_2$ by thermal and catalytic effects. Some recent designs envisage recycling by external pipe-work hot regenerated catalyst for admixture with cooler spent catalyst recovered from the hydrocarbon conversion operation such that the combined temperature of the mixed catalyst streams is sufficiently high to rapidly initiate coke burning and accomplish catalytic CO burning in a substantial portion of a dense fluid bed of catalyst being regenerated. However, it has been found in some regeneration operations that the CO concentration in the flue gas exceeds emission standards and that unburned residual carbon on the regenerated catalyst remains undesirably high, that is, above about 0.05%. Several design parameters and apparatus arrangements have been proposed to solve this problem. Nevertheless, these designs often suffer from a number of problems such as high catalyst inventory, low temperature, incomplete catalyst regeneration, lack of operating flexibility to control catalyst recycle, or employment of external apparatus configurations or arrangements in an effort to effect more suitable control in the operation, thereby contributing to costs.

Some regenerator designs result in substantial increases in height, thereby increasing construction costs. In these arrangements, the circulating catalyst inventory and necessary catalyst bed hold-ups have increased and high temperature metallurgy requirements have increased. These factors contribute to increased material, maintenance and operating costs of the units. Additional operating details of these and other known FCC units can be found in U.S. Patents 2,383,636; 2,689,210; 3,338,821; 3,812,029; 4,093,537; 4,118,338; and 4,218,306; and in Venuto et al, *Fluid Catalytic Cracking with Zeolite Catalysts,* Marcel Dekker, Inc. (1979).

In some recent designs, the flexibility of FCC regenerators is improved by providing a means of recycling at least a portion of the regenerated hot catalyst into a bed of spent catalyst (U.S. Patent 4,118,338). Recycle is accomplished by providing two concentric fluidized catalyst beds in the regenerator; the inner bed contains spent catalyst and the outer bed contains regenerated catalyst. The amount of regenerated catalyst recycled into the inner bed is controlled by the pressure differential between the upflowing inner catalyst bed and the downflowing outer catalyst bed. This improved regenerator design increases the flexibility of the FCC installation, allows for high catalyst recirculation ratios and substantially decreases the total inventory of the catalyst necessary for carrying out the process. However, this design, under certain operating conditions, also makes it possible for the respective catalyst beds to reverse their intended direction of flow. In addition, under some operating conditions, the regenerated catalyst may retain more residual coke than desired.

US—A—4,246,231 discloses an apparatus for F.C.C of hydrocarbons where trickle valves are positioned at the lower ends of dip-legs depending from cyclones to prevent reverse flow of gases into the cyclones. However this system does not allow the control of the rate of flow of regenerated catalyst into the spent catalyst chamber.

In accordance with the present invention, there is provided a fast fluidized bed FCC regenerator containing means for internally recirculating regenerated catalyst while preventing catalyst flow reversals, and means for producing a very clean catalyst with a minimum of residual coke. The FCC regenerator of this invention contains a short riser to produce a very clean catalyst with a minimum of catalyst inventory. Potential catalyst flow reversals are eliminated by providing a trickle valve preventing flow reversal of the catalyst from the spent catalyst bed to the regenerated catalyst bed.

The present invention provides a fluid catalytic cracking apparatus comprising a cracking vessel and a regenerator vessel that comprises a chamber for spent catalyst, a chamber for regenerated catalyst and means which, in use, enables a portion of the catalyst to be recycled from the regenerated catalyst chamber to the spent catalyst chamber, characterized in that the means enabling catalyst to be recycled comprises at least one trickle valve in communication with the chambers for regenerated catalyst and spent catalyst.

The present invention also provides a fluid catalytic cracking process comprising the steps of cracking a hydrocarbon feed in a reactor riser in the presence of a cracking catalyst, separating cracked product from spent catalyst, regenerating spent catalyst in a regenerator vessel by fluidizing it with a regenerating gas and recycling a portion of the regenerated catalyst to the reactor riser and another portion to the regenerator vessel for admixture with spent catalyst to be regenerated, characterized in that regenerated catalyst is recycled for admixture with spent catalyst via a trickle valve that prevents backflow of spent catalyst.

According to one aspect of the invention, the regenerator comprises a cylindrical chamber generally restricted in size to house an upflowing fluid mass of catalyst which is surrounded by a larger vessel of

2

sufficient diameter to provide an annular chamber about the cylindrical chamber to house a mass of downflowing catalyst. The annular chamber houses a second substantially more dense fluid mass of downflowing catalyst particles than the fluid mass of upflowing catalyst particles housed in the cylindrical chamber.

Communication between the cylindrical chamber and the annular chamber is provided by one or more trickle valves in the wall defining the cylindrical chamber. The trickle valves allow a portion of the regenerated catalyst to be recycled into the cylindrical chamber, but prevent the flow of the regenerating gas and of the spent catalyst from the cylindrical chamber into the annular chamber. Spent catalyst particles are transferred from the reactor vessel to the cylindrical chamber in the regenerator vessel by a conduit equipped with a conventional valve.

According to a preferred aspect of the invention, regenerated catalyst is recirculated by one or more pipes which communicate at their lower ends with the cylindrical chamber. Each of these pipes has a trickle valve which allows a portion of the regenerated catalyst to be recycled into the cylindrical chamber, but which prevents the flow of the regenerating gas end of the spent catalyst from the inner cylindrical chamber to the pipes. The exact number, configuration and size of the pipes depends on the amount of catalyst to be recycled and on the operational characteristics of each particular installation. The mixture of spent and regenerated catalyst is then transferred upwardly through the cylindrical chamber by an oxygen-containing gas stream introduced through an opening at the bottom of the regenerator. A horizontal baffle placed in the bottom portion of the cylindrical chamber in coaxial alignment with and vertically spaced from the bottom opening and from the open discharge end of the opening aids with distributing the regeneration gas across the lower cross-sectional area of the cylindrical chamber. A perforated distributor grid may be placed across the bottom portion of the cylindrical chamber above the baffle, or in lieu thereof, to further distribute the upflowing regeneration gas.

The fluid mass of upflowing catalyst particles of relatively high particle concentration in the cylindrical chamber undergoes regeneration by burning deposited carbonaceous material on the catalyst particles to form carbon monoxide in the presence of the oxygen-containing gas. All of the oxygen-containing regeneration gas required in the regenerator is usually introduced at the bottom of the regenerator. The horizontal perforated grid in the bottom portion of the cylindrical chamber may be used alone or in conjunction with the baffle described above. Preferably, the spent catalyst is introduced directly through the side wall into the lower end of the cylindrical chamber, just downstream of the perforated grid. The perforated grid thus comprises an air distributing grid for distributing oxygen-containing regeneration gas.

In an alternative arrangement, regenerated catalyst is recirculated as described above but the regenerating gas and the spent catalyst are mixed in a vertical pipe below the cylindrical chamber and the regenerating gas lifts the spent catalyst particles as a suspension into the bottom of the cylindrical chamber through a distributor.

In any of these regeneration gas inlet arrangements, the volume and velocity of gas will be sufficient to maintain an upflowing suspension providing a concentration of catalyst particles of from about 80 to about 640 kg/m³ and more usually less than 560 kg/m³.

After passing through the cylindrical chamber, the fluidized catalyst is conducted into a relatively short riser, having a length of about 0.3 to 10 m, preferably about 4.5 to 6.5 m, placed directly above the cylindrical chamber, in which additional burning of the coke deposited on the catalyst particles takes place. The top of the riser is capped by a member housing a catalyst phase of lower density than that in the cylindrical chamber below. Below that member the top of the riser is equipped with one or more radially extending inverted "U" shaped arms, open at the bottom side for changing the direction of flow of the suspension and promoting the separation of hot regenerated catalyst particles from gaseous combustion products. The outer ends of the radiating arms extend downwardly and are in open communication at their ends with the annular chamber about the cylindrical chamber, or the top ends of the pipes which extend into the cylindrical chamber.

A relatively dense, downwardly moving fluid bed of catalyst particles of higher particle density than the upflowing mass of catalyst in the cylindrical chamber is maintained in the pipes or in the annular chamber. The height of this downwardly moving fluid catalyst bed is sufficient to develop a catalyst pressure head to effect recycle of regenerated catalyst particles as desired from the pipe, or from the bottom opening of the annular chamber, into the bottom opening of the cylindrical chamber. Thus, the amount of catalyst recycled and mixed with the spent catalyst suspension discharged into the bottom regenerator opening may be controlled by the pressure differential between the upflowing and downflowing catalyst masses, i.e., the developed catalyst pressure head by the downflowing dense fluid bed of catalyst above that in the upflowing catalyst mass. The pressure developed by the catalyst in the pipes or in the annular chamber may be controlled substantially by the head of catalyst contained therein and/or by the amount of gaseous material introduced to the annular chamber or the pipes. Thus, the more that the catalyst in the annular chamber or in the pipes is fluffed or fluidized with fluidizing gas, the less pressure head that catalyst will develop. The gaseous material introduced to the annular chamber or pipes may be a regeneration gas, such as air, to effect a secondary high temperature burning of any residual carbon on the catalyst, or an inert gas for fluffing and/or stripping the catalyst. In either arrangement, the volume of gas introduced may be used to control the pressure head developed by the recirculating bed of catalyst.

In the preferred aspect using pipes for recycling a portion of the regenerated catalyst into the cylindrical chamber, the pipes may be sized to accommodate the desired recirculation rate. In the alternative aspect incorporating trickle valves in the cylindrical wall, the annular chamber may be sized to accommodate the desired recirculation rate.

The internal catalyst recycle rate in the pipes or in the annular chamber can be controlled by varying the regeneration gas velocity in the dense fluid bed contained in the combustor. Higher regeneration gas velocities entrain more catalyst into the upper regeneration vessel, thus increasing the catalyst flow rate through the annular chamber or the pipes which in turn increases the regenerated catalyst flow into the regenerator combustor. The annular chamber or pipes and the combustor bed form two communicating beds which are always in pressure balance. Since the catalyst bed levels are always in equilibrium, the recirculation rate can be maintained constant for a given regeneration gas velocity and fixed total catalyst inventory in the regenerator.

Similarly, the regenerated catalyst recirculation rate can be reduced by decreasing the regeneration gas velocity in the combustor dense bed.

The effect of two different catalyst recirculation rates on regenerator performance has been evaluated and the results obtained are summarized in Table 1, below. In the event of a reduction in the reactor feed rate, the regenerator operation can be controlled by decreasing both the regenerator catalyst inventory and the dense bed velocity.

<div align="center">TABLE 1</div>

| | | |
|---|---|---|
| Catalyst recycle ratio (recirculated/spent) | 10.0 | 3.0 |
| Average catalyst density (combustor), kg/m$^3$ | 288 | 272 |
| Catalyst holdup (combustor), tonnes | 32.7 | 34.5 |
| Total catalyst holdup, tonnes | 59.0 | 49.0 |
| Regenerator ΔP, kPa | 42 | 31 |
| Dense bed temperature, °C | 688 | 687 |
| Maximum outlet temperature, °C | 713 | 717 |
| Carbon on regenerated catalyst, weight % | 0.066 | 0.067 |
| Flue gas oxygen content, volume % | 2.1 | 1.4 |
| Gas velocity in dense bed, m/second | 2.2 | 1.8 |

An alternative method for controlling the head of catalyst within the pipes or the annular chamber and without the use of gaseous material introduced into the pipes or the annular chamber, comprises providing the inlet ends of the pipes or of the annular chamber with weirs, and controlling the inventory and therefore the level of catalyst in the upper regenerator vessel above the base of the weirs. The higher the level of catalyst above the base of the weirs, the higher the rate of catalyst flow over the weirs into the pipes or into the annular chamber. The increase in flow rate increases the head of catalyst within the pipes or annular chamber, and results in a corresponding increase in flow rate out of the pipes or annular chamber into the cylindrical chamber.

The regenerator apparatus of the invention eliminates the necessity for a slide valve used in prior art regenerators with external recycling and decreases the total amount of catalyst inventory required in the process, both of which factors reduce operating costs. In addition, the recirculation rate of the regenerated catalyst can be accurately and easily controlled, thereby facilitating precise control of the entire FCC installation and increasing flexibility of its operating conditions. The provision of a short riser within the regenerator vessel, in addition to improving the regeneration process, also decreases the overall height of the unit, resulting in further cost reductions.

The trickle valves used in both the preferred and the alternative designs described above are of conventional design. Such valves permit passage of the catalyst, in response to the predetermined pressure exerted on it, in one direction, but prevent the passage of other materials (for example, regenerating gas and spent catalyst) in the opposite direction. The trickle valves are placed substantially vertically in the pipes or in the wall of the annular chamber.

The apparatus described above is similar to the apparatus described in U.S. Patent 4,118,338 in that a cylindrical regenerator vessel is sized to house primarily an upflowing fluid mass of catalyst particles providing a concentration of catalyst particles of about 80 to about 640 kg/m$^3$. A relatively dispersed catalyst phase will be maintained for a limited time in the restricted upper portion before entering the disengaging arms. Regenerated hot catalyst particles are introduced into the bottom of the upflowing catalyst mass at a temperature of 670 to about 870°C, preferably less than about 790°C, and most preferably

<div align="center">4</div>

less than about 735°C. The catalyst temperatures developed during regeneration in the cylindrical, upflowing fluid mass of catalyst particles are controlled substantially as a function of regeneration gas flow rate and temperature, the amount of combustibles to be burned, the spent catalyst flow rate, the temperature of the recycled catalyst mass, and the amount of catalyst recycled to the bottom inlet of the cylindrical chamber. The recirculation of regenerated catalyst from the downwardly flowing dense catalyst phase in the annular chamber or the pipes to the upflowing less dense catalyst mass can be varied from a small fraction (about 0.1) to a high multiple of the catalyst flow (about 10). Thus, the upflowing cylindrical fluid catalyst mass is maintained at a relatively high superficial gas velocity (less than 3 m/sec) since high rates of entrainment can be accommodated with separation and return of catalyst through the pipes or the annular chamber, to the upflowing bed. This system for effecting fluidized catalyst regeneration has greatly increased regeneration efficiency due to better mixing and more uniform temperatures in the catalyst mass. Preheating of regeneration air and addition of a combustible fuel in addition to carbonaceous deposits on the catalyst may also be relied upon the exercise some effect on the regeneration temperatures achieved in the system.

The portion of the vessel extending above the cylindrical chamber of the regenerator is sized to house a plurality of cyclonic separators comprising two or more sequentially arranged cyclones, so that catalyst particles entrained with gaseous material recovered from the pipes, the annular chamber and/or the cylindrical chamber are separated and returned by cyclone dip-legs to the dense bed of catalyst.

The hydrocarbon conversion side of the FCC unit is conventional in construction, and comprises one or more conventional riser conversion reaction zones to which hot regenerated catalyst is supplied from the regenerator described above. An oil charge, such as gas oil or other high boiling material to be cracked, is fed to the riser with or without a gasiform diluent material. The diluent material may be light gaseous hydrocarbon comprising $C_5$ and lighter materials or it may be a relatively inert material such as steam. The diluent may be mixed with the oil charge before contact with the catalyst or it may be used to initially lift the catalyst up a portion of the riser conversion zone before contact with oil. The regenerated catalyst is mixed with the oil feed to be converted under conditions to form a suspension at an elevated temperature of at least 480°C, and more usually at a temperature of from 540 to about 620°C. Preheating of the hydrocarbon charge up to about 420°C in combination with multiple nozzle feed inlets across the riser cross-section to obtain a more completely dispersed catalyst-oil suspension and mix temperature may also be employed.

The suspension formed in the riser is passed upwardly through the riser at a velocity providing a hydrocarbon residence time of from 1 to 20 seconds, preferably of from 2 to 10 seconds, and most preferably less than about 8 seconds, depending on the characteristics of the oil charge to be cracked, the activity of the catalyst and temperature employed. Over-cracking of the charge is to be avoided, particularly when desiring gasoline boiling-range product. After the suspension exits the riser cracker, it is discharged directly into one or more separators connected generally radially to the discharge end of the riser. The separators relied upon for separating the catalyst hydrocarbon suspension may be any conventional separators for example, the cyclone separators of U.S. Patent 4,043,899 comprising strippers in the lower section of the separator. The cyclonic-stripping separation combination is particularly desirable to minimize undesired product over-cracking at the elevated cracking temperatures employed since it permits a greater control of the time the hydrocarbons are in contact with catalyst particles at the elevated temperatures. Rapid separation of at least a major portion of the catalyst from hydrocarbon cracking products upon discharge from the riser is most important in order to preserve the selectivity of the catalyst employed under the operating conditions of the cracking operation.

The upper end of the hydrocarbon conversion riser with attached primary separators is housed in a large cylindrical vessel having a larger diameter in its upper portion than its lower portion. The upper portion of this relatively large cylindrical vessel provides space for housing additional secondary cyclonic separators for the further separation and recovery of catalyst fines from the hydrocarbon product vapors.

Catalyst particles separated from the hydrocarbon product vapors are passed downwardly into and through a lower stripping section comprising the smaller diameter portion of the vessel in which the catalyst is counter-currently contacted with additional stripping gas to further remove entrained hydrocarbons from the catalyst. The stripping zone may be a separate cylindrical chamber of suitable diameter or an annular section as shown in the drawings described below. The temperature of the stripping zone is usually at least 480°C and may be as high as 540°C or 620°C. Generally, it is 25 to 55°C below the inlet cracking temperature. Thus, a stripping gas such as steam or other relatively inert gas should be at an appropriately elevated temperature to minimize reducing the temperature of the discharged and separated catalyst before contact with oxygen-containing gas in the regeneration zone.

In a time-restricted regeneration operation, particularly desired in modern refinery operations, combustion of carbonaceous material with oxygen-containing gas is desirably initiated at a temperature of at least about 590°C, and more preferably of at least about 635°C. The two-stage, fluid catalyst regeneration arrangement of the invention, incorporating a relatively short riser, allows the regeneration operation to be carried out at higher temperatures of about 650 to about 705°C without significant upset of the catalyst regeneration sequence. In any of the catalyst regeneration arrangements described above, it is important to particularly promote the combustion of carbon monoxide formed in the regenerator and to recover the heat generated by the catalyst regeneration operation.

The apparatus and method of the invention have several noteworthy features. The apparatus is useful for cracking various hydrocarbon fractions including straight run gasoline and higher boiling materials, such as atmospheric and vacuum gas oils, recycle oils, residues, shale oils, solvent-refined coal, and tar sands extraction products to products of improved octane rating. It is particularly useful for cracking gas oils and higher boiling hydrocarbon fractions such as recycle and residual oils, vacuum gas oils, wide boiling-range crude oils, and hydrogenated resids to obtain desired products.

The catalysts which may be employed with advantage in the apparatus of the invention include amorphous and crystalline silica-alumina catalytic materials and mixtures thereof. The crystalline silica-alumina materials may be of a relatively large pore size such as faujasite crystalline zeolites, mordenite and other known materials. Alternatively, the catalyst may be a mixture of large and smaller pore crystalline zeolites, such as disclosed in U.S. Patent 3,748,251. On the other hand, the catalyst employed may be one of the catalysts disclosed in U.S. Patent 3,886,060.

The invention will now be described in greater detail by way of example only with reference to the accompanying drawings, in which

Figure 1 is a cross-sectional elevation of one apparatus of the invention using a series of internal pipes equipped with trickle valves for recycling the regeneration catalyst;

Figure 2 is a cross-sectional view along line A—A of the apparatus shown in Figure 1; and

Figure 3 is a cross-sectional elevation of an alternative apparatus of the invention using an open outer annular chamber with trickle valves for recycling the catalyst.

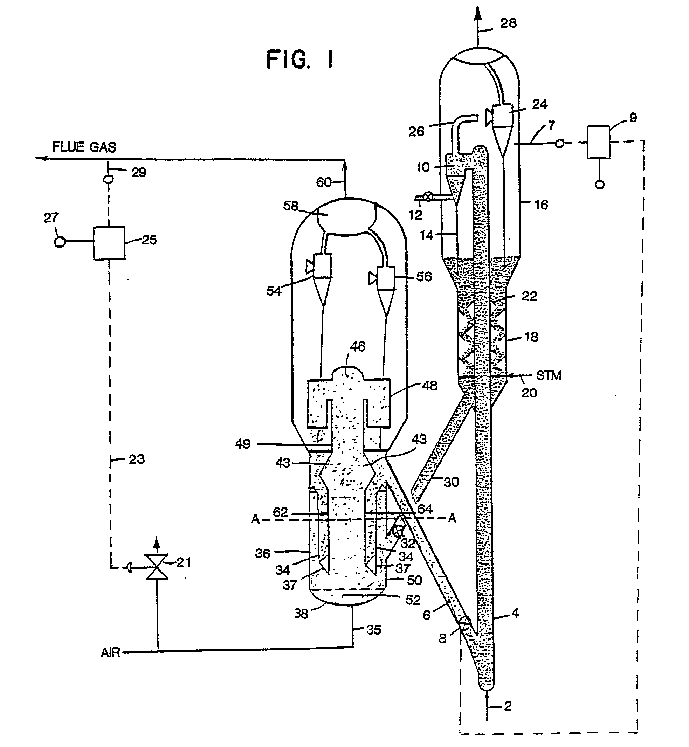

Referring to the drawings, Figure 1 is a cross-sectional elevation of the preferred apparatus of the invention using a series of internal pipes for recycling the regenerated catalyst. A hydrocarbon oil feed such as gas oil or higher boiling material is introduced by conduit 2 to the bottom of riser reactor 4. Hot regenerated catalyst is also introduced to the bottom of the riser 4 by a standpipe 6 containing a flow control valve 8. A solid-liquid-vapor suspension is formed in the lower portion of the riser 4 at a temperature of about about 510°C, preferably above about 525°C, and most preferably of about 525 to 650°C, depending on the hydrocarbon conversion desired and the composition of the hydrocarbon material charged to the riser. The suspension formed in the riser base portion is passed through the riser under selected temperature and residence time conditions. The hydrocarbon residence time is from 1 to 20 seconds, and preferably 2 to 10 seconds. In the unit shown in Figure 1, the suspension is discharged from riser 4 into one or more cyclonic separators attached to the end of the riser and represented by separator 10. Catalyst particles separated in cyclone 10 pass in contact with stripping gas introduced by conduit 12 to the lower portion of the cyclone. Catalyst thus contacted and separated is withdrawn by dip-leg 14 for the discharge into a lower bed of catalyst.

The upper end of riser 4 with attached separator 10 or another suitable arrangement, is housed in a larger vessel 16 referred to as a receiving and catalyst collecting vessel. The lower portion of vessel 16 is generally of smaller diameter and comprises a catalyst stripping section 18 into which a suitable stripping gas, such as steam, is introduced at a lower position for example by conduit 20. The stripping section is provided with a plurality of baffles 22 over which the downflowing catalyst passes counter-currently to upflowing stripping gas.

Cyclonic separator 24 is provided for recovering hydrocarbon products and stripping gas from entrained catalyst particles. There may also be a second sequential stage of catalyst separation, not shown for clarity, for product vapors discharged from cyclone 10 by conduit 26. Hydrocarbon products and stripping gas separated from the catalyst are withdrawn by suitable conduits communicating with a plenum chamber and withdrawal conduit 28.

Stripped catalyst comprising carbonaceous deposits from the riser conversion is withdrawn from the bottom of the stripping section at an elevated temperature by standpipe or conduit 30 containing flow control valve 32. The stripped catalyst is passed from standpipe 30 into the bottom portion of the regenerator vessel 36. A regeneration gas is also introduced to the bottom of the regenerator by conduit 35. The regeneration gas is either preheated air or any other oxygen-containing gas. The regeneration gas is introduced in an amount forming a suspension with the catalyst which is caused to move upwardly through the vessel 36. Regenerator vessel 36 comprises a bottom closure member 38 shown in the drawing to be approximately hemispherical in shape although other shapes may also be employed, such as conical or a less-rounded dish shape.

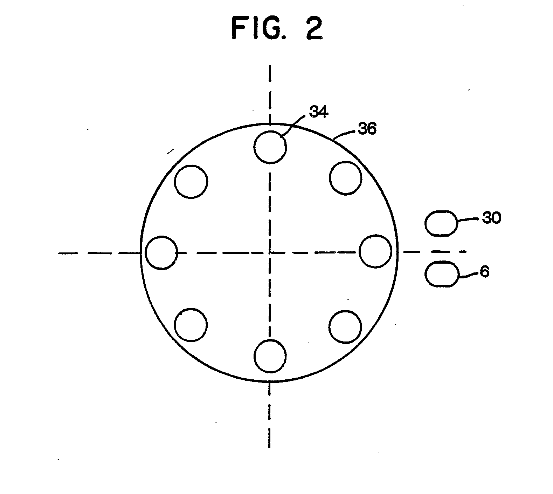

A series of pipes 34 (also shown in cross-section in Figure 2), comprising at least one, preferably two, and as many as eight or more pipes, provides communication between the chamber 36 and the outlet of arms 48. Each of the pipes 34 is equipped with a trickle valve 37 which allows for the recycle of regenerated catalyst into the chamber 36, but prevents the flow of the spent catalyst and the regeneration gas from chamber 36 into pipes 34. Vessel 36 is provided with a generally conical head member 43 terminating in a relatively short cylindrical section of a sufficient vertical height to accommodate a plurality of radiating arms 48. The radiating arms 48 are open at their bottom sides since they are "U" shaped channels in cross-section, and they operate to discharge a concentrated stream of catalyst substantially separated from combustion product gases generally downwardly into the open top ends of the pipes 34. Vessel 36 is referred to herein as the combustor vessel, since it is in this portion of the regenerator that the combustion of carbonaceous material and formed carbon monoxide is promoted. A distributor grid 50 is preferably used in the lower cross-section of the vessel 36 above bottom 38 to facilitate distribution of the regeneration gas passed upwardly into the combustor. Inverted circular cup plate 52 may also be used, if desired, to aid in the distribution of the regeneration gas. Thus, the grid 50 may be used alone or in combination with plate 52.

After passing through the vessel 36, the suspension is conducted to a riser 49 where the combustion of residual carbonaceous materials on the catalyst and of carbon monoxide is further facilitated by the additional residence time provided by the riser. The riser is of such a length and cross-sectional area that the residence time of the catalyst suspension therein is at least 0.1 second, preferably 1 to 5 seconds, and most preferably 1 to 2 seconds. After passing through the riser, the suspension passes to the conical head 46 and then into the plurality of U-shaped radiating arms 48. The suspension exits from the arms 48 and is discharged onto the top of a conical member 43. A portion of the discharged catalyst is recirculated into the spent catalyst bed 36 through the pipes 34. The pipes 34 are open at the top, and they are attached for the purpose of receiving the recycled catalyst to the conical member 43 by any convenient means, for example they may be welded around the circumference of member 43. The remainder of the regenerated catalyst discharged from the arms 48 is conveyed by the conduit 6 to the riser 2 of the reactor 4. In the upper portion of vessel 36, a plurality of cyclonic separators 54 and 56 are provided for separating combustion flue gases from entrained catalyst particles. The separated flue gases pass into plenum 58 for withdrawal by conduit 60.

In the regenerator shown in Figure 1, there are eight pipes 34, each having an inside diameter so as to allow 10:1 recirculation rates; the ratio of length to diameter of the riser 49 is about 2.0 to about 2.5; the ratio of the upper portion of the regenerator vessel to the lower portion thereof is about 1.0 to about 2.0.

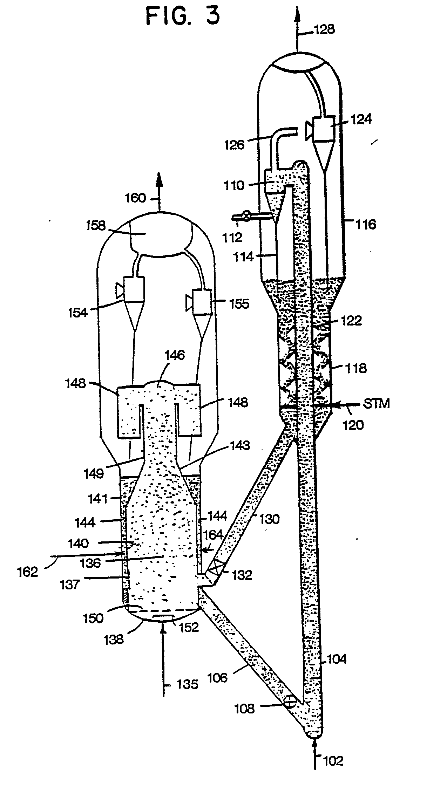

In an alternative design shown in Figure 3, the regenerator vessel is essentially of the same construction and design as that shown in Figure 1, except that the cylindrical chamber 136 is surrounded by a concentric annular chamber 144 formed by the wall 140 of the combustion chamber 136 and the walls 141 of the outer regenerator shell. Thus, the annular chamber 144 is physically completely separated from the combustion chamber 136 by the wall 140. Communication between the cylindrical chamber 136 and the annular chamber 144 is provided by at least one, preferably at least two, and as many as eight or more, trickle valves in the wall 140. The trickle valves 137, shown in Figure 3, also allow for the recycle of the regenerated catalyst from the annular chamber 144 into the chamber 136, but do not allow spent catalyst or the regeneration gas to flow from chamber 136 into the annular chamber 144. The operation of the trickle valves, as in the design shown in Figure 1, is also controlled by the pressure exerted on them by the mass of regenerated catalyst in the annular chamber 144. The regenerator of Figure 3 is otherwise operated in a manner identical to that of Figure 1, as described above.

In Figure 3, all of the apparatus parts are numbered in a manner similar to the corresponding parts of Figure 1, with a prefix.

In the regenerator shown in Figure 3, the annular chamber is sized to accommodate 10:1 recirculation rates; there are eight trickle valves 137; the ratio of length to diameter of the riser 149 is about 2.0 to about 2.5; and the ratio of the upper portion of the regenerator vessel to the lower portion is about 1.0 to about 2.0.

The FCC apparatus of the invention is equipped with a number of control loops used in conventional FCC units and the operation of these conventional control loops can be integrated with each other and/or can be kept independent of each other.

Thus, for example, the design shown in Figure 1 includes a conventional control loop (disclosed, for example, in U.S. Patent 4,093,537) controlling the rate of air flow into the regenerator and the rate of transfer of regenerated catalyst into the reactor riser. The control loop includes a composition sensor 29 which indicates the carbon monoxide and oxygen content of the flue gas, and generates a signal indicative of that composition. Valve 21 is commonly controlled by operator intervention to control the flow of air and thus the CO and oxygen content of the flue gas. Alternatively, the signal generated by composition sensor 29 is transmitted to the composition controller 25. Controller 25, equipped with set points 27, places a signal on line 23, which signal is indicative of the deviation of the carbon monoxide composition of the flue gas from the set point 27 to adjust the control valve 21 in a direction to reduce the deviation of the measured composition from the predetermined composition as defined by the set point 27. In general, the set point is adjusted to a CO content of less than 2000 ppm and preferably less than 50 ppm; the flue gas, in general, will contain less than 2% excess oxygen, and preferably about 0.5 to 1.0% excess oxygen. On the other hand, the rate of flow of regenerated catalyst into the reactor riser is controlled by a control loop comprising a temperature sensor 7 at the top of the reactor 16 and a controller 9, of a conventional type.

The regenerator described above and shown in the drawings maintains during operation a substantial mass or bed of fluid regenerated catalyst particles in the annular chamber. Fluidizing gas which may or may not contain oxygen is introduced to the pipes or the annular chamber by conduits 62 and 64.

The catalyst regeneration operation of the invention is intended to provide regenerated catalyst at an elevated temperature above 650°C and preferably from 675 to 760°C having residual coke on catalyst of less than about 0.15 and more usually from 0.01 to 0.05 weight percent. The catalyst regeneration operation of the invention is accomplished by passing oxygen-containing gas upwardly through a fluidized spent catalyst bed in the combustion zone. Regenerated catalyst at an elevated temperature of at least 650°C is recycled by the catalyst pressure head developed in the pipes or in the annular chamber for admixture with spent catalyst passing into the combustion section. The recycle of regenerated catalyst for admixture with spent catalyst is essentially self-controlling once certain operating flow characteristics are established,

7

such as the catalyst flow rate to the hydrocarbon conversion zone, catalyst make-up rate to the operation and the flow rate of the regenerating gas and of the suspension passing upwardly through the regenerator, and head of catalyst above the bottom of standpipes 34 or above the bottom of the annular chamber 144. Thus, the suspension of catalyst being subjected to regenerating conditions passes through gradations of catalyst particle concentration or density per given volume within the range of about 560 to about 80 kg/m$^3$. In the combustion section 36 (Figure 1) or 136 (Figure 3), it is not necessary to maintain a dense fluid bed of catalyst with a significant interface between the more dispersed phase of catalyst above it. On the contrary, the upflowing mass of catalyst may be maintained relatively uniform in particle concentration until encountering the conical head section and radiating discharge arms which will accelerate the suspension and thus reduce the particle concentration.

The downflowing mass of regenerated catalyst collected in the annular chamber or in the pipes of the regenerator at an elevated temperature above 650°C up to about 760°C may be contacted with additional oxygen-containing gas, should further combustion of carbon deposits be required. This downflowing mass of catalyst will normally comprise a concentration of catalyst particles in excess of 80 kg/m$^3$ and, in any event, the concentration will be sufficient to assure flow from the annular chamber or the pipes into the upflowing suspension entering the combustor. Regenerated catalyst collected in the annular chamber or the pipes is withdrawn by standpipe 6 for passage to the riser hydrocarbon conversion zone 4.

The catalyst regeneration system of the invention contemplates providing the catalyst with a carbon monoxide oxidation promoter in an amount particularly promoting the combustion of formed carbon monoxide within the region of high particle concentration in the combustor. Catalysts particularly suitable for this purpose include chromium and platinum in selected small amounts, as well as other materials known in the art. The oxidation promoter may be added as separate discrete catalyst particles or it may be added to the cracking catalyst employed in the operation. Substantially any cracking catalyst may be employed in the system of the invention whether it is primarily an amorphous catalyst, a crystalline aluminosilicate catalyst or a mixture thereof. The method and apparatus of the invention is particularly suitable for using high and lower activity, relatively low coke-producing crystalline zeolite cracking catalysts comprising faujasite crystalline zeolite and others known in the art in a regeneration arrangement particularly promoting the recovery of available heat generated by the burning of carbonaceous deposits of hydrocarbon conversion.

To evaluate technical performance characteristics of the regenerator of the invention, a computer model has been compared with computer models of known regenerators using the same feedstock, charge rate and carbon level on the regenerated catalyst. Performance characteristics of the regenerators are summarized in Table 2 below. Relative vessel dimensions are given in terms of the ratios of individual dimensions to the respective dimensions of the prior art riser regenerator.

TABLE 2

| | Riser regenerator (described in U.S. Patents 4,035,284 and 4,218,306)*** | Fast fluidized bed with short riser (figs. 1 or 3) | Conventional** dense bed regenerator of U.S. patent 3,161,583*** |
|---|---|---|---|
| Relative Vessel Dimensions | | | |
| Combustor Diameter | 1.0 | 0.90 | 1.40 |
| Unit Height | 1.0 | 0.75—0.9 | 0.5—0.6 |
| Unit Surface Area | 1.00 | 1.01 | 0.55 |
| Regenerator Performance | | | |
| Catalyst recycle ratio (recirculated/ spent) | 3.0 | 10.0 | 0.5 |
| Average catalyst density (combustor), kg/m³ | 272 | 288 | 288 |
| Catalyst holdup (combustor), kg/m³ | 34.5 | 32.7 | 72.6 |
| Total catalyst holdup, tonnes | 82.6 | 59.0 | 72.6 |
| Regenerator ΔP, kPa | 30/31* | 41 | 19 |
| Dense bed temperature, °C | 687 | 688 | 689 |
| Maximum outlet temperature, °C | 717 | 713 | 709 |
| Carbon on regenerated catalyst, weight % | 0.067 | 0.066 | 0.067 |
| Flue gas oxygen, volume % | 1.44 | 2.10 | 2.10 |
| Gas velocity in dense bed, m/s | 2.1 | 2.2 | 0.95 |
| Gas velocity in riser, m/s | 10.7 | 11.1 | 1.0 |

* Two differently-sized riser regenerations, with dimensions indicated were used in the computerized simulation study.

** 50% combustion efficiency was used in calculating performance of the conventional dense bed.

*** All dimensions in this Table were chosen arbitrarily and they do not necessarily represent any particular regenerator.

The data in Table 2 indicate that the fast fluidized bed regenerator of the invention has the same advantages as the prior art riser regenerator (U.S. Patent 4,118,338) at substantially less catalyst inventory and without the cost of a slide valve. The prior art dense bed regenerator, although having less metal surface area than both the fast fluidized bed and the riser regenerators, has a higher catalyst inventory and its operation is plagued with problems due to non-uniform mixing and catalyst short-circuiting.

## Claims

1. A fluid catalytic cracking apparatus comprising a cracking vessel and a regenerator vessel that comprises a chamber for spent catalyst, a chamber for regenerated catalyst and means which, in use, enables a portion of the catalyst to be recycled from the regenerated catalyst chamber to the spent catalyst chamber, characterized in that the means enabling catalyst to be recycled comprises at least one trickle valve in communication with the chambers for regenerated catalyst and spent catalyst.

2. Apparatus according to claim 1, wherein the chambers for regenerated catalyst and for spent catalyst are mutually adjacent and separated by a wall containing the trickle valve(s).

3. Apparatus according to claim 2, wherein the wall between the chambers is generally cylindrical and the chamber for regenerated catalyst is generally annular and is arranged around the chamber for spent catalyst.

9

4. Apparatus according to claim 1, wherein the chamber for regenerated catalyst includes one or more pipes extending into the chamber for spent catalyst, the or each pipe including a trickle valve.

5. A fluid catalytic cracking process comprising the steps of cracking a hydrocarbon feed in a reactor riser in the presence of a cracking catalyst, separating cracked product from spent catalyst, regenerating spent catalyst in a regenerator vessel by fluidizing it with a regeneration gas and recycling a portion of the regenerated catalyst to the reactor riser and another portion to the generator vessel for admixture with spent catalyst to be regenerated, characterized in that regenerated catalyst is recycled for admixture with spent catalyst via a trickle valve that prevents backflow of spent catalyst.

6. A process according to claim 5, wherein the trickle valve is arranged in a wall that separates the spent catalyst and the regenerated catalyst in the regenerator vessel.

7. A process according to claim 5, wherein the trickle valve is arranged in a pipe containing regenerated catalyst and extending into the fluidized spent catalyst.

8. A process according to any one of claims 5 to 7, wherein the weight ratio of regenerated catalyst recycled into the spent catalyst to spent catalyst is from 0.1 to 10.

**Patentansprüche**

1. Vorrichtung zum flüssigen katalytischen Cracken, die ein Crack-Gefäß und ein Regenerator-Gefäß umfaßt, das eine Kammer für den verbrauchten Katalysator, eine Kammer für den regenerierten Katalysator und eine Einrichtung umfaßt, die in Benutzung ermöglicht, daß ein Anteil des Katalysators aus der Kammer des regenerierten Katalysators zu der Kammer des verbrauchten Katalysators zurückgeführt wird, dadurch gekennzeichnet, daß die Einrichtung, die ermöglicht, daß der Katalysator zurückgeführt wird, mindestens ein Riesel- bzw. Sickerventil in Verbindungsmöglichkeit mit Kammern für den regenerierten Katalysator und den verbrauchten Katalysator umfaßt.

2. Vorrichtung nach Anspruch 1, worin die Kammern für den regenerierten Katalysator und für den verbrauchten Katalysator gegenseitig benachbart und abgetrennt sind durch eine Wand, die das (die) Riesel- bzw, Sickerventil(e) enthält.

3 Vorrichtung nach Anspruch 2, worin die Wand zwischen den Kammern im allgemeinen zylindrisch ist und die Kammer für den regenerierten Katalysator im allgemeinen ringförmig und um die Kammer für den verbrauchten Katalysator herum angeordnet ist.

4. Vorrichtung nach Anspruch 1, worin die Kammer für den regenerierten Katalysator ein oder mehrere Rohre umfaßt, die sich in die Kammer für den verbrauchten Katalysator erstrecken, wobei das oder jedes Rohr ein Riesel- bzw. Sickerventil einschließt.

5. Verfahren zum flüssigen, katalytischen Cracken welches die Stufen des Crackens einer Kohlenwasserstoffzufuhr in einem Riser-Reaktor in Gegenwart eines Crack-Katalysators, das Abtrennen des gecrackten Produktes von dem verbrauchten Katalysator, das Regenerieren des verbrauchten Katalysators in einem Generator-Gefäß durch Fluidisieren mit einem Regenerierungsgas und Rückführen eines Teils des regenerierten Katalysators zu dem Riser-Reaktor und eines anderen Teiles zu dem Generator-Gefäß zur Beimischung mit dem verbrauchten Katalysator, der zu regenerieren ist, umfaßt, dadurch gekennzeichnet, daß der regenerierte Katalysator aus der Beimischung mit dem verbrauchten Katalysator durch ein Riesel- bzw. Sickerventil zurückgeführt wird, das das Zurückströmen des verbrauchten Katalysators verhindert.

6. Verfahren nach Anspruch 5, worin das Riesel- bzw. Sickerventil in einer Wand angeordnet ist, die den verbrauchten Katalysator und den regenerierten Katalysator in dem Generator-Gefäß trennt.

7. Verfahren nach Anspruch 5, worin das Riesel- bzw. Sickerventil in einem Rohr angeordnet ist, das den regenerierten Katalysator enthält und sich in den fluidisierten verbrauchten Katalysator erstreckt.

8. Verfahren nach einem der Ansprüche 5 bis 7, worin das Gewichtsverhältnis des regenerierten Katalysator, der in den verbrauchten Katalysator zurückgeführt wird, zum verbrauchten Katalysator von 0,1 bis 10 beträgt.

**Revendications**

1. Dispositif de craquage catalytique fluidisé, comprenant un récipient de craquage et un récipient régénérateur qui comprend une chambre pour le catalyseur usé, chambre pour le catalyseur régénéré et des moyens dont l'usage permet le recyclage d'une partie du catalyseur de la chambre de catalyseur régénéré vers la chambre de catalyseur usé, caractérisé en ce que les moyens permettant le recyclage du catalyseur comprennent au moins une vanne d'égouttage communiquant avec les chambres du catalyseur régénéré et du catalyseur usé.

2. Dispositif selon la revendication 1, dans lequel les chambres du catalyseur régénéré et du catalyseur usé sont adjacentes et séparées par une paroi qui contient la ou les vannes d'égouttage.

3. Dispositif selon la revendication 2, dans lequel la paroi entre les chambres est généralement cylindrique et la chambre du catalyseur régénéré est généralement annulaire et est disposée autour de la chambre du catalyseur usé.

4. Dispositif selon la revendication 1, dans lequel la chambre du catalyseur régénéré comprend un ou plusieurs tuyaux s'étendant vers la chambre du catalyseur usé, ce ou ces tuyaux comprenant chacun une vanne d'égouttage.

5. Procédé de craquage catalytique fluidisé comprenant les étapes de craquage d'une charge d'hydrocarbures dans un réacteur ascendant en présence d'un catalyseur de craquage, séparation du produit craqué et du catalyseur usé, régénération du catalyseur usé dans un récipient régénérateur par fluidisation à l'aide d'un gaz de régénération et recyclage d'une portion du catalyseur régénéré vers le réacteur ascendant et une autre portion du récipient générateur pour mélange avec du catalyseur usé à régénérer, caractérisé en ce que le catalyseur régénéré est recyclé pour être mélangé avec du catalyseur usé par une vanne d'égouttage qui empêche le reflux du catalyseur usé.

6. Procédé selon la revendication 5, dans lequel la vanne d'égouttage est disposée dans une paroi qui sépare le catalyseur usé et le catalyseur régénéré dans le récipient de régénération.

7. Procédé selon la revendication 5, dans lequel la vanne d'égouttage est disposée dans un tuyau qui contient le catalyseur régénéré et s'étend vers le catalyseur usé fluidisé.

8. Procédé selon l'une quelconque des revendications 5 à 7, dans lequel le rapport en poids du catalyseur régénéré recyclé dans le catalyseur usé au catalyseur usé est compris entre 0,1 et 10.

# 0 086 580

## FIG. I

# FIG. 2

**0 086 580**

FIG. 3